# EUROPÄISCHE PATENTSCHRIFT

(11) **EP 0 659 806 B1**
(45) Veröffentlichungstag und Bekanntmachung des Hinweises auf die Patenterteilung: **27.09.2000**
(21) Anmeldenummer: 94119609.9
(22) Anmeldetag: 12.12.1994
(51) Int. Cl.: C08G 77/60, C04B 35/589

(54) **Präkeramische Polyborosilazane, Verfahren zu deren Herstellung sowie daraus erhältliches keramisches Material**
Preceramic polyborosilazanes, process for their preparation and ceramic products obtainable therefrom
Polyborosilazanes précéramiques, leur procédé de préparation et produits céramiques à partir de ceux-ci

(30) Priorität: 23.12.1993 DE 4344161; 08.02.1994 DE 4403839
(43) Veröffentlichungstag der Anmeldung: 28.06.1995
(73) Patentinhaber: BAYER AG, 51368 Leverkusen (DE)
(72) Erfinder: Baldus, Dr. Hans-Peter, D-51379 Leverkusen (DE)

(56) Entgegenhaltungen:
- DE-A- 4 107 108
- CHEMICAL ABSTRACTS, vol. 120, no. 10, 7.März 1994 Columbus, Ohio, US; abstract no. 114282, & MATERIALS RESEARCH SOCIETY SYMPOSIA PROCEEDINGS, Bd. 271, 1992 BOSTON, Seiten 821-826, H. P. BALDUS ET AL. ' Synthesis of advanced ceramics in the systems silicon-boron-nitrogen'

## Beschreibung

Die vorliegende Erfindung betrifft neue präkeramische Oligo- oder Polyborosilazanverbindungen, die das Strukturmerkmal Si-N-B aufweisen sowie keramisches Material auf der Basis SiN und BN, Verfahren zur jeweiligen Herstellung sowie die Verwendung der Polyborosilazane und der keramischen Materialien.

Die Werkstoffe Siliciumnitrid und Siliciumcarbid sind aufgrund ihrer Festigkeit und Korrosionsbeständigkeit prinzipiell gut geeignet für keramische Turbolader, Turbinen von Düsentriebwerken sowie als Auskleidung von Raketendüsen und Brennkammern. Zur Herstellung dieser Werkstoffe werden in den letzten Jahren zunehmend polymere Präkeramiken auf Siliciumbasis eingesetzt.

Solche Polymere werden u.a. verwendet für die Herstellung von keramischen Formkörpern, Beschichtungen und Fasern. Dabei findet die Formgebung im polymeren Zustand statt und durch anschließende Pyrolyse wird der so erhaltene Formkörper in keramisches Material umgewandelt. Weiterhin werden diese Polymere als Binder und Sinterhilfsmittel bei der Herstellung von keramischen Bauteilen aus Pulvern, als Matrixmaterial für Kompositbauteile sowie zur Infiltration von porösen Keramiken, wie z.B. reaktionsgebundenem SiC, verwendet.

Polymere Precursoren zur Herstellung von Siliciumnitrid, Siliciumcarbonitrid und Siliciumcarbid sind beschrieben in den Patenten US-A 4 310 751, US-A 4 312 970, US-A 4 650 837, US-A 4 639 501, US-A 4 482 669, US-A 4 780 337, US-A 4 820 738 und US-A 4 720 532.

Die Thermoschockbeständigkeit, Oxidations- und Hochtemperaturbeständigkeit von reinem Siliciumnitrid bzw. -carbid sind allerdings für hohe thermische Belastungen und besonders korrosive Atmosphäre noch nicht ausreichend.

Es ist zwar bekannt, daß Komposite aus Si₃N₄ bzw. SiC und BN, die durch Mischen und Heißpressen der binären Pulver hergestellt wurden, aufgrund der Verringerung des E-Moduls eine erheblich bessere Thermoschockbeständigkeit aufweisen als Bauteile aus den reinen binären Verbindungen. Allerdings führen die beschriebenen Herstellungsmethoden zu Inhomogenitäten, die für die geringen Festigkeiten der Komposite mit verantwortlich sind. Weiterhin können auf diese Weise keine Fasern und Beschichtungen hergestellt werden.

Ein möglicher Weg zur Verbesserung der Homogenität solcher bor- und siliciumhaltigen Stoffe sowie eine Verbreiterung ihres Anwendungsbereiches ist die Verwendung von borhaltigen präkeramischen Polymeren, sogenannten Polyborosilazanen. Mit borhaltigen Polymeren können Lösungen für alle oben angegebenen Einsatzgebiete realisiert werden.

Die Herstellung von Polyborosilazanen ist offenbart in den Patentanmeldungen EP-389 084 A2, EP-549 225 A1, EP-536 698 A1, EP-404 503 A1, EP-424 082 A2 sowie in Chem. Mater. 1993, 5, 547-556.

Die dort beschriebenen Herstellungsmethoden gehen alle von Polyhydridosilazanen aus, die durch eine Copolymerisation mit einer löslichen bororganischen Verbindung in Polyborosilazane umgewandelt werden. Die Verfahren führen aber naturgemäß nicht zu einer absolut homogenen Verteilung von Bor in der Polysilazanmatrix, da ein Polymer vorgelegt wird, das während der Reaktion mit der Borverbindung als Block erhalten bleibt. Während des Pyrolysevorganges findet deshalb hauptsächlich eine Vernetzung der SiN(C)-Funktionen, bzw. BN-Funktionen, mit der jeweils gleichartigen Spezies statt, was zur Folge hat, daß im pyrolysierten, keramischen Material größere SiN(C)-Einheiten neben hexagonalem, turbostratischem BN(C) vorliegen. Diese Inhomogenitäten führen wiederum zu Defiziten in den thermischen und mechanischen Eigenschaften. Desweiteren sind die verwendeten bororganischen Verbindungen nicht im großtechnischen Maßstab zugänglich und prohibitiv teuer.

Ein weiterer Nachteil dieser Polymere ist ihre Instabilität bezüglich längerer Lagerung bei Raumtemperatur infolge fortschreitender Vernetzung. Nach kurzer Zeit werden diese hydridosilazanhaltigen Block-Copolymere unschmelzbar bzw. unlöslich.

Aus der DE-A 41 07 108 gehen Polyborosilazane bzw. molekular disperse keramische Materialien hervor, die über die Ammonolyse der molekularen Einkomponenten-Precursoren Cl₃Si-NH-BCl₂ (TADB) bzw. (Cl₃Si-NH)₂-BCl (TACB) und nachfolgende Pyrolyse hergestellt werden. Hierbei wird die Homogenität auf atomarer Ebene dadurch gewährleistet, daß die Precursormolekule intrinsische (Si-N-B)-Bindungen besitzen, die bei der nachfolgenden Ammonolyse und Pyrolyse erhalten bleiben. Weiterhin soll die strukturelle Homogenität der polymeren Präkeramiken und der keramischen Materialien dadurch gewährleistet werden, daß die erste Koordinationssphäre sowohl der Si- als auch der B-Atome nach dem Ammonolyseschritt nur aus Stickstoff besteht. Dies wird dadurch erreicht, daß die Si- bzw. B-Atome in den Molekülen jeweils nur an N oder Cl gebunden sind. Bei der Ammonolyse mit Ammoniak oder Aminen werden die Chloratome dann jeweils durch Stickstoff ersetzt. Stabile lösliche und schmelzbare Polyborosilazane werden über die Ammonolyse mit Methylamin erhalten. Die Pyrolyse dieser Polymere ergibt eine keramische Ausbeute von ca. 70 %. Dieser Wert ist relativ niedrig und wird insbesondere von den Perhydropolysilazanen gemäß der US-A 4 397 828 um 10-15 % übertroffen. Nachteilig wirkt sich eine schlechte keramische Ausbeute vor allem bei Anwendungen als Spritzgußmittel, und bei der Verwendung als Matrix von Kompositbauteilen aus.

Aufgabe dieser Erfindung ist die Bereitstellung von Polyborosilazanen, die eine keramische Ausbeute > 80 % aufweisen und deren Pyrolyse zu keramischen Materialien mit einer homogenen Verteilung von Silicium und Bor auf atomarer Ebene führt.

Überraschenderweise wurde nun gefunden, daß die Ammonolyse von Mischungen von chlorhaltigen, molekularen Silanverbindungen der Formel SiCl(R₁,R₂,R₃), wobei R₁, R₂ und R₃ unabhängig voneinander Cl, H, C₁-C₆-Alkyl, Phenyl, Vinyl, Alkylamino oder Alkylsilyl bedeuten, mit Organylaminoverbindungen des Typs HNR₂, wobei R = H, C₁-C₆-Alkyl, Vinyl oder Phenyl bedeuten, zu neuen, auf atomarer Ebene homogenen Polyborosilazanen führt. Die erfindungsgemäßen Borosilazane können je nach verwendeter Silanverbindung neben (Si-N-B)-, auch (Si-C)- und (Si-H)-Bindungen aufweisen. Diese präkeramischen Polymere ergeben bei der Pyrolyse eine keramische Ausbeute von > 80 %.

Gegenstand der Erfindung sind somit Oligo- oder Polyborosilazanverbindungen, die das Strukturmerkmal Si-N-B aufweisen, wobei die erste Koordinationssphäre jedes Boratoms nur aus Stickstoff, die erste Koordinationssphäre der Siliciumatome mindestens aus zwei Stickstoffatomen besteht und die restlichen Koordinationsstellen aus Wasserstoff und/oder Kohlenstoff bestehen.

In einer bevorzugten Ausführungsform betragen dabei die Atomverhältnisse von
- N/Si:: 0,2-4,
- B/Si:: 0,05-1,5,
- O/Si:: maximal 0,2,
- C/Si:: maximal 1,5 und
- H/Si:: maximal 20.

Gegenstand dieser Erfindung ist auch ein Verfahren zur Herstellung der erfindungsgemäßen Oligo- oder Polyborosilazanverbindungen, bei dem eine Mischung von Cl₃Si-NH-BCl₂ mit molekularen, chlorhaltigen Silanverbindungen der Formel ClSi(R₁,R₂R₃), wobei R₁, R₂ und R₃ unabhängig voneinander Cl, H, C₁-C₆-Alkyl, Phenyl, Vinyl, Alkylamino oder Alkylsilyl bedeuten, einer Ammonolyse unterzogen wird.

Bevorzugt sind Verbindungen, die ähnliche oder gleiche Ammonolysegeschwindigkeiten aufweisen wie TADB und TACB. Dies ist erforderlich, um ein homogenes Polymer und letztendlich eine homogene Keramik zu erhalten.

Die borhaltige Komponente (TADB bzw. TACB) kann mit einer oder mehreren der genannten nur Si-haltigen Komponenten in beliebigem Verhältnis gemischt werden, je nachdem welches B zu Si-Verhältnis und C zu N-Verhältnis in der resultierenden Keramik gewünscht wird. Bevorzugt werden molare Verhältnisse von Si zu B zwischen 10:1 und 1:1 und (C:N)-Verhältnisse zwischen 10:1 und 1:10.

Die Ammonolyse der so hergestellten Mischungen zu monomeren, oligomeren oder polymeren Borosilazanverbindungen kann mit Ammoniak, primären oder sekundären Alkylaminen bzw. aromatischen Aminen oder Mischungen der genannten Ammonolysereagentien erfolgen.

Bevorzugt wird die Ammonolyse mit Ammoniak, primären oder sekundären Alkylaminen bzw. aromatischen Aminen HNR₂ oder Mischungen der genannten Verbindungen durchgeführt, wobei R = H, C₁-C₆-Alkyl, Phenyl oder Vinyl bedeutet.

Für diese Reaktion können alle bekannten Ammonolyseverfahren angewendet werden; das betrifft die Reaktion mit festem oder flüssigem Ammoniak bzw. Organylamin bei tiefen Temperaturen sowie die Reaktion mit gasförmigem Ammoniak bzw. Aminen in einem organischen Lösungsmittel oder pur. Als Lösungsmittel können beispielsweise Hexan, Toluol, Methylenchlorid, Pyridin oder THF dienen. Die bei diesen Reaktionen anfallenden Hydrochloride, die i.a. in organischen Lösungsmitteln unlöslich sind, können durch einen Filtrations-bzw. Sublimationsschritt vom gewünschten Produkt abgetrennt werden.

Ein weiteres erfindungsgemäßes Ammonolyseverfahren ist dadurch gekennzeichnet, daß die Mischungen zuerst mit Methylamin umgesetzt werden und anschließend, nach Entfernung des gebildeten Hydrochlorids, das oligomere Reaktionsprodukt zur weiteren Vernetzung nochmals mit TADB oder einer molekularen, chlorhaltigen Silanverbindung der Formel ClSi(R₁, R₂, R₃), wobei R₁, R₂ und R₃ unabhängig voneinander Cl, H, C₁-C₆-Alkyl, Phenyl, Vinyl, Alkylamino oder Alkylsilyl bedeuten, bei Temperaturen zwischen -80 und +100°C umgesetzt wird. Zum Abreagieren von gegebenenfalls noch nicht ammonolysierten Chlor-Funktionen wird bei Temperaturen zwischen -80°C und +60°C noch einmal gasförmiger oder flüssiger Ammoniak in die Reaktionslösung eingebracht. Das gegebenenfalls entstehende Ammoniumchlorid wird abgetrennt und das Filtrat gegebenenfalls vom Lösungsmittel befreit.

Die Vernetzung von monomer oder oligomer anfallenden Borosilazanen kann drucklos oder unter erhöhtem Druck, thermisch und/oder mit einen Vernetzungsreagenz erfolgen. Bevorzugt werden die Polyborosilazanverbindungen dadurch erhalten, daß die genannten Borosilazanverbindungen durch thermische Polymerisation oder durch Umsetzung mit Vernetzungsreagentien wie Ammoniak, KH, Thionylchlorid oder Alkylammoniumsalzen in offenen oder geschlossenen Systemen unter Normaldruck oder erhöhtem Druck polymerisiert werden.

Die Vernetzung kann ebenfalls durch Bestrahlen mit hochenergetischen elektromagnetischen Wellen oder mit Elementarteilchen erfolgen.

Die Konsistenz der so entstandenen erfindungsgemäßen Polyborosilazane reicht je nach verwendeter Precursormischung, Ammonolyse (Ammoniak, primäres Amin oder sekundäres Amin) und Vernetzungsmittel von flüssig über harz- bzw. wachsartig bis hin zum hochvernetzten festen Zustand.

Die Polymerisationstemperatur liegt zwischen -20°C und +300°C, die Polymerisationsdauer zwischen 5 Minuten und 10 Tagen.

Die Polymerisation erfolgt durch Abspaltung von Aminresten und/oder von Wasserstoff unter Bildung von neuen (Si-N-B)-, (Si-N-Si)- oder von (B-N-B)-Bindungen.

Das mittlere Molekulargewicht der Produkte liegt zwischen 200 und 200.000 g/Mol je nach Vernetzungsgrad und verwendeter Precursormischung. Stabile lösliche präkeramische Polyborosilazane, die nur aus Silicium, Bor, Stickstoff und Wasserstoff bestehen, können z.B. durch die Umsetzung einer Mischung von einem Teil TADB mit 4-6 Teilen SiH₂Cl₂ mit Ammoniak in einem organischen Lösungsmittel erhalten werden.

Gegenstand dieser Erfindung ist weiterhin ein Verfahren zur Herstellung von keramischem Material, wobei die oligomeren oder polymeren Borosilazanverbindungen in inerter oder NH₃-haltiger Atmosphäre bei Temperaturen von 600 bis 2000°C, bevorzugt zwischen 1200 und 1600°C, pyrolysiert werden.

Die keramischen Ausbeuten der Pyrolysen liegen zwischen 81 % und 95 %. Das erfindungsgemäße Pyrolyseprodukt ist ein keramisches Material, das zu über 98 % aus Si, B, N und C besteht und (Si-N-B)-Bindungen aufweist. Weiterhin ist das Material durch folgende Atomverhältnisse charakterisiert:
- N/Si:: 0,2-4
- B/Si:: 0,01-1,5
- O/Si:: 0,2 oder weniger
- C/Si:: 1,5 oder weniger
- H/Si:: 0,05 oder weniger.

Die keramischen Pyrolyseprodukte fallen im allgemeinen amorph an, können aber auch kristallin sein. Art und Menge der kristallinen Phasen sind abhängig von der Zusammensetzung der Precursormischung sowie von dem verwendeten Pyrolysegas und der Temperatur. Als kristalline Phasen können auftreten: Si₃N₄, SiC, BN und B₄C. Im amorphen Zustand ist die Elementverteilung im keramischen Material erfindungsgemäß im molekularen Maßstab homogen. Nach der Kristallisation, die i.a. bei Temperaturen oberhalb von 1600°C erfolgt, liegen die einzelnen Phasen nanokristallin entmischt nebeneinander vor. In diesem Falle liegt mindestens bis zu einer lateralen Abmessung von 0,5 µm eine homogene Elementverteilung vor.

Bei Pyrolyseprodukten, die ein molares Si:B-Verhältnis zwischen 4:1 und 1:1 aufweisen, bleibt der amorphe Zustand bis mindestens 1800°C erhalten. Bei größeren (Si:B)-Verhältnissen wird der Kristallisationsbeginn sukzessive zu tieferen Temperaturen hin verschoben. Bei (Si:B)-Verhältnissen > 20:1 ist kein Einfluß des Boranteils auf die Kristallisationstemperatur mehr nachzuweisen.

Die thermische Stabilität der aus den erfindungsgemäßen Polyborosilazanen hergestellten keramischen Materialien ist abhängig vom Kohlenstoff- und Borgehalt. Niedrige Kohlenstoff- und Borgehalte bedingen eine thermische Stabilität, die in etwa vergleichbar ist mit der thermischen Stabilität von Siliciumnitrid, hohe Kohlenstoff- und Borgehalte ergeben eine thermische Stabilität, die vergleichbar ist mit den thermischen Stabilitäten von Siliciumcarbid, Bornitrid und Borcarbid. Keramische Materialien, die aus kohlenstofffreien Polyborosilazanen hergestellt wurden, haben bei molaren (Si:B)-Verhältnissen ≤ 5:1 eine höhere thermische Stabilität als reines Siliciumnitrid.

Da die erfindungsgemäßen Polyborosilazane zum Teil schmelzbar sowie in einer Vielzahl von organischen Lösungsmitteln löslich sind, lassen sie sich in Form einer Schmelze bzw. einer Lösung zu geeigneten Halbzeugen oder Formkörpern wie z.B. Fasern, Beschichtungen, Folien und monolithischen keramischen Bauteilen verarbeiten. Die hochviskosen Polyborosilazane können auch direkt zu geeigneten Formkörpern durch Spritzgießen oder Extrudieren umgeformt werden.

Gegenstand der Erfindung ist auch die Verwendung der erfindungsgemäßen oligomeren oder polymeren Borosilazanverbindung zur Herstellung von keramischen Fasern, keramischen Beschichtungen und keramischen Formkörpern, als Binder zur Herstellung von sinterfähigen Grünkörpern und als Matrix- bzw. Füllmaterial für die Herstellung von Keramikmaterial enthaltenden Verbundwerkstoffen sowie die Verwendung der erfindungsgemäßen keramischen Materialien zur Herstellung von keramischen Formkörpern und keramischen Beschichtungen.

Die Erfindung wird nachfolgend anhand von Beispielen erläutert, ohne daß hierin eine Einschränkung zu sehen ist.

### Beispiele:

### Beispiel I

In einen 1l-Dreihalskolben werden ca. 400 ml Methylenchlorid eingefüllt. Anschließend werden ca. 45 g Dichlorsilan bei -30°C einkondensiert und 15 g Cl₃Si-NH-BCl₂ mit einer Spritze eingefüllt. Anschließend wird Ammoniak mit einer Rate von 300 ccm/min eingeleitet, was zu einer Erwärmung auf -5°C führt.

Nach 3-stündigem Einleiten ist die Reaktion abgeschlossen, was sich dadurch bemerkbar macht, daß die Temperatur wieder auf -30°C zurückgeht. Anschließend läßt man auf Raumtemperatur erwärmen und rührt die Suspension aus Polyborosilazan, NH₄Cl und Methylenchlorid noch ca. 1 Stunde. Nach Abfiltrieren des Rückstandes wäscht man diesen noch 3-4 mal mit Methylenchlorid, um das am NH₄Cl anhaftende Produkt in die flüssige Phase überzuführen.

Nach Entfernen des Lösungsmittels erhält man 28 g eines festen kohlenstofffreien Polyborosilazans, das in Kohlenwasserstoffen nach Auslagerung bei Raumtemperatur über einen Zeitraum von 6 Wochen immer noch löslich ist. Pyrolyse bis 1400°C in Stickstoff ergibt eine keramische Ausbeute von ca. 92 %. Das Pyrolysat hat einen Boranteil von ca. 3,2 Gew.-% und einen Kohlenstoffanteil von 0,1 Gew.-%.

Temperaturabhängige Röntgenmessungen im Vakuum an dem so erhaltenen Borsiliciumnitrid zeigen das Auftreten von Röntgensignalen von α-Siliciumnitrid bei ca. 1750°C. Beugungsmuster anderer Phasen wurden nicht beobachtet.

### Beispiel 2

In einen 1l-Dreihalskolben werden ca. 400 ml Methylenchlorid eingefüllt. Anschließend werden ca. 55 g Trichlorsilan bei -30°C einkondensiert und 47 g Cl₃Si-NH-BCl₂ mit einer Spritze eingefüllt. Anschließend wird ein 1:2-Gemisch aus Ammoniak und Methylamin mit einer Rate von 300 ccm/min eingeleitet, was zu einer Erwärmung auf -10°C führt.

Nach 3-stündigem Einleiten ist die Reaktion abgeschlossen, was sich dadurch bemerkbar macht, daß die Temperatur wieder auf -30°C zurückgeht. Anschließend läßt man auf Raumtemperatur erwärmen und rührt die Suspension aus Polyborosilazan, NH₄Cl, CH₃NH₃Cl und Methylenchlorid noch ca. 1 Stunde. Nach Abfiltrieren des Rückstandes wäscht man diesen noch 3-4 mal mit Methylenchlorid, um das am Salz anhaftende Produkt in die flüssige Phase überzuführen.

Nach Entfernen des Lösungsmittels erhält man 56 g eines festen Polyborosilazans, das in Kohlenwasserstoffen löslich und schmelzbar ist (135°C) und bei der Pyrolyse bis 1400°C in Stickstoff eine keramische Ausbeute von ca. 84 % ergibt. Das Pyrolysat hat einen Boranteil von ca. 5,1 Gew.-% und einen Kohlenstoffanteil von ca. 8 Gew.-%. Temperaturabhängige Röntgenmessungen im Vakuum an so erhaltenem Borsiliciumcarbonitrid zeigen das Auftreten von α-Siliciumnitrid-Röntgensignalen ab ca. 1820°C. Beugungsmuster anderer Phasen wurden nicht beobachtet.

### Beispiel 3

100 ml Methylamin werden in einem evakuierten 500 ml Dreihalskolben mit 500 ml Tropftrichter ohne Druckausgleichsrohr bei -78°C einkondensiert. Anschließend gibt man 10 g einer 2:1:1 Mischung aus Cl₃Si-NH-BCl₂, Dichlorsilan und Trichlorsilan in 250 ml Petrolether unter starkem Rühren so zu, daß die Innentemperatur nicht über -20°C ansteigt. Der Feststoff, der im wesentlichen aus Methylaminhydrochlorid besteht, wird mit einer Umkehrfritte abfiltriert. Von der Klaren Petroletherlösung wird das Lösungsmittel abgesaugt. Es bleibt ein farbloses zähflüssiges Öl zurück (7 g).

### Beispiel 4

5 g des aus Beispiel 3 erhaltenen Öls werden in einem 50 ml Kolben unter Schutzgas auf ca. 50°C erhitzt. Anschließend leitet man gasförmigen Ammoniak mit einer Rate von 4 ml/min durch die Flüssigkeit. Es entsteht innerhalb von 2 Stunden ein glasartiges, klares, lösliches Polymer mit einem Schmelzpunkt von 180°C.

Dieses Polymer wird anschließend unter Stickstoff bei 1400°C pyrolysiert. Es entsteht ein schwarzes Pulver mit einem Borgehalt von 7 Gew.-% und einem Kohlenstoffgehalt von 9,4 %. Die Ausbeute an keramischem Material beträgt ca. 85 %.

Temperaturabhängige Röntgenmessungen an dem so erhaltenen Borsiliciumcarbonitrid belegen das Auftreten von α-Siliciumnitrid-Röntgensignalen ab ca. 1900°C. Ab ca. 2000°C entsteht zusätzlich nanokristallines ß-SiC. Beugungsmuster anderer Phasen wurden nicht beobachtet.

### Beispiel 5

100 ml der aus Beispiel 3 erhaltenen Lösung von Borosilazan in Petrolether werden mit 2 g Dichlormethylsilan bei 20°C umgesetzt und die Reaktionslösung zwei Stunden bei dieser Temperatur gerührt. Anschließend wird Ammoniak bis zur Sättigung eingeleitet. Das entstandene Ammoniumchlorid wird entfernt und das Lösungsmittel abgezogen. Als Rückstand erhält man 3 g eines festen Polyborosilazans, das in Kohlenwasserstoffen löslich ist und bei 85°C schmilzt. Bei der Pyrolyse in Stickstoff erhält man eine keramische Ausbeute von 81 % (Elementaranalyse: Si: 39,1 %, B: 4,3 %, N: 43,4 %, C: 12,3 %).

## Patentansprüche

1. Monomere, oligomere oder polymere Borosilazanverbindungen, die das Strukturmerkmal Si-N-B aufweisen, dadurch gekennzeichnet, daß die erste Koordinationsphäre jedes Boratoms nur aus Stickstoff die erste Koordinationssphäre der Siliciumatome mindestens aus zwei und weniger als vier Stickstoffatomen besteht und die restlichen Koordinationsstellen aus Wasserstoff und/oder Kohlenstoff bestehen.

2. Monomere, oligomere oder polymere Borosilazanverbindungen gemäß Anspruch 1, dadurch gekennzeichnet, daß die Atomverhältnisse von
N/Si: 0,2-4,
B/Si: 0,05-1,5,
O/Si: maximal 0,2,
C/Si: maximal 1,5 und
H/Si: maximal 20 betragen.

3. Verfahren zur Herstellung von monomeren, oligomeren oder polymeren Borosilazanverbindungen gemäß einem der Ansprüche 1 oder 2, dadurch gekennzeichnet, daß eine Mischung von Cl₃Si-NH-BCl₂ mit chlorhaltigen Silanverbindungen der Formel ClSi(R¹,R²,R³), wobei R¹, R² und R³ unabhängig voneinander Cl, H, C₁-C₆-Alkyl, Phenyl, Vinyl, Alkylamino oder Alkylsilyl bedeuten, einer Ammonolyse unterzogen wird.

4. Verfahren gemäß Anspruch 3, dadurch gekennzeichnet, daß die chlorhaltigen Silanverbindungen der Formel ClSi(R¹,R²,R³) mindestens zwei Chloratome aufweisen.

5. Verfahren gemäß einem der Ansprüche 3 oder 4, dadurch gekennzeichnet, daß die Ammonolyse mit Ammoniak, primären oder sekundären Alkylaminen bzw. aromatischen Aminen HNR₂ oder Mischungen der genannten Verbindungen durchgeführt wird, wobei R = H, C₁-C₆-Alkyl, Phenyl oder Vinyl bedeuten.

6. Verfahren gemäß einem oder mehreren der Ansprüche 3 bis 5, dadurch gekennzeichnet, daß in einem weiteren Schritt thermisch oder durch Umsetzung mit Vernetzungsreagentien wie Ammoniak, KH, Thionylchlorid oder Alkylammoniumsalzen in offenen oder geschlossenen Systemen unter Normaldruck oder erhöhtem Druck polymerisiert wird.

7. Verfahren zur Herstellung von oligomeren oder polymeren Borosilazanverbindungen gemäß einem der Ansprüche 1 oder 2, dadurch gekennzeichnet, daß eine Mischung von Cl₃Si-NH-BCl₂ mit chlorhaltigen Silanverbindungen der Formel ClSi(R¹,R²,R³), wobei R¹, R² und R³ unabhängig voneinander Cl, H, C₁-C₆-Alkyl, Phenyl, Vinyl, Alkylamino oder Alkylsilyl bedeuten,
1) einer Ammonolyse mit einem Amin der allgemeinen Formel RNH₂, wobei R kohlenstoffhaltig ist, unterzogen wird,
2) das oligomere Reaktionsprodukt gemäß 1) nochmals mit Cl₃Si-NH-BCl₂, mit chlorhaltigen Silanverbindungen der Formel ClSi(R¹,R²,R³) oder mit einer Mischung beider Komponenten umgesetzt wird,
3) das Reaktionsprodukt gemäß 2) in inerter Atmosphäre mit Ammoniak zur Reaktion gebracht wird und anschließend das gebildete Ammoniumchlorid abgetrennt wird.

8. Verfahren zur Herstellung von keramischem Material, dadurch gekennzeichnet, daß oligomere oder polymere Borosilazanverbindungen gemäß einem oder mehreren der Ansprüche 1 und 2 in inerter oder NH₃-haltiger Atmosphäre oder im Vakuum bei Temperaturen zwischen 600 und 2000°C, bevorzugt bei Temperaturen zwischen 1200 bis 1600°C pyrolysiert werden.

9. Verwendung der oligomeren oder polymeren Borosilazanverbindungen gemäß einem der Ansprüche 1 oder 2 zur Herstellung von keramischen Fasern, keramischen Beschichtungen und keramischen Formkörpern.

10. Verwendung der oligomeren oder polymeren Borosilazanverbindungen gemäß einem der Ansprüche 1, oder 2 als Binder zur Herstellung von sinterfähigen Grünkörpern und als Matrix- bzw. Füllmaterial für die Herstellung von Keramikmaterial enthaltenden Verbundwerkstoffen.

## Claims

1. Monomeric, oligomeric or polymeric borosilazane compounds which have the structural feature Si-N-B, characterized in that the first co-ordination sphere of each boron atom consists only of nitrogen, the first co-ordination sphere of the silicon atoms consists of at least two and less than four nitrogen atoms and the remaining co-ordination sites are occupied by hydrogen and/or carbon.

2. Monomeric, oligomeric or polymeric borosilazane compounds according to Claim 1, characterized in that the atom ratios are
N/Si: 0.2 - 4,
B/Si: 0.05 - 1.5,
O/Si: not more than 0.2,
C/Si: not more than 1.5 and
H/Si: not more than 20.

3. Process for preparing monomeric, oligomeric or polymeric borosilazane compounds according to either Claim 1 or 2, characterized in that a mixture of Cl₃Si-NH-BCl₂ with chlorine-containing silane compounds of the formula ClSi(R¹,R²,R³), where R¹, R² and R³ are, independently of one another, Cl, H, C₁-C₆-alkyl, phenyl, vinyl, alkylamino or alkylsilyl, is subjected to ammonolysis.

4. Process according to Claim 3, characterized in that the chlorine-containing silane compounds of the formula ClSi(R¹,R²,R³) have at least two chorine atoms.

5. Process according to either Claim 3 or 4, characterized in that the ammonolysis is carried out using ammonia, primary or secondary alkylamines or aromatic amines HNR₂ or mixtures of the compounds mentioned, where R=H, C₁-C₆-alkyl, phenyl or vinyl.

6. Process according to one or more of Claims 3 to 5, characterised in that, in a further step, a polymerization is carried out thermally or by reaction with crosslinking reagents such as ammonia, KH, thionyl chloride or alkylammonium salts in open or closed systems under atmospheric pressure or superatmospheric pressure.

7. Process for preparing oligomeric or polymeric borosilazane compounds according to either Claim 1 or 2, characterized in that a mixture of Cl₃Si-NH-BCl₂ with chlorine-containing silane compounds of the formula ClSi(R¹,R²,R³), where R¹, R² and R³ are, independently of one another, Cl, H, C₁-C₆-alkyl, phenyl, vinyl, alkylamino or alkylsilyl,
1) is subjected to ammonolysis by an amine of the general formula RNH₂, where R contains carbon,
2) the oligomeric reaction product from 1) is reacted again with Cl₃Si-NH-BCl₂, with chlorine-containing silane compounds of the formula ClSi(R¹,R²,R³) or with a mixture of both components,
3) the reaction product from 2) is reacted with ammonia in an inert atmosphere and the ammonium chloride formed is subsequently separated off.

8. Process for producing a ceramic material, characterized in that oligomeric or polymeric borosilazane compounds according to one or more of Claims 1 and 2 are pyrrolysed in an inert or NH₃-containing atmosphere or under reduced pressure at temperatures between 600 and 2000°C, preferably at temperatures between 1200 and 1600°C.

9. Use of the oligomeric or polymeric borosilazane compounds according to either Claim 1 or 2 for producing ceramic fibres, ceramic coatings and shaped ceramic bodies.

10. Use of the oligomeric or polymeric borosilazane compounds according to either Claim 1 or 2 as binders for producing sinterable green bodies and as matrix or filler material for the production of composites containing ceramic material.

## Revendications

1. Composés monomères, oligomères ou polymères de borosilazanes qui présentent la caractéristique de structure Si-N-B, caractérisés en ce que la première sphère de coordination de chaque atome de bore est uniquement constituée d'azote, la première sphère de coordination des atomes de silicium est constituée de deux et de moins de quatre atomes d'azote et les positions de coordination restantes sont constituées d'hydrogène et/ou de carbone.

2. Composés monomères, oligomères ou polymères de borosilazanes selon la revendication 1, caractérisés en ce que les rapports atomiques sont de
N/Si : 0,2-4
B/Si : 0,05-1,5
O/Si : au maximum 0,2
C/Si : au maximum 1,5 et
H/Si : au maximum 20.

3. Procédé pour la préparation de composés monomères, oligomères ou polymères de borosilazanes selon l'une quelconque des revendications 1 ou 2, caractérisé en ce que l'on soumet à une ammoniolyse un mélange de Cl₃Si-NH-BCl₂ avec des composés de silanes contenant du chlore de la formule ClSi(R₁,R₂,R₃), R₁, R₂, R₃ étant indépendamment Cl, H, un groupe alkyle en C₁-C₆, phényle, vinyle, alkylamino ou alkylsilyle.

4. Procédé selon la revendication 3, caractérisé en ce que les composés de silane contenant du chlore de la formule ClSi(R₁,R₂,R₃) présentent au moins deux atomes de carbone.

5. Procédé selon l'une quelconque des revendications 3 ou 4, caractérisé en ce que l'on réalise l'ammoniolyse avec de l'ammoniaque, des alkylamines primaires ou secondaires respectivement des amines aromatiques HNR₂ ou des mélanges des composés cités, R = H, un groupe alkyle en C₁-C₆, phényle ou vinyle.

6. Procédé selon l'une ou plusieurs quelconques des revendications 3 à 5, caractérisé en ce que l'on polymérise dans une étape supplémentaire de manière thermique ou par réaction avec des réactifs de réticulation comme l'ammoniaque, KH, le chlorure de thionyle ou des sels d'alkylammonium dans des systèmes ouverts ou fermés à pression atmosphérique ou sous pression élevée.

7. Procédé pour la préparation de composés oligomères ou polymères de borosilazanes selon l'une quelconque des revendications 1 ou 2, caractérisé en ce qu'un mélange de Cl₃Si-NH-BCl₂ avec des composés de silanes contenant du chlore de la formule ClSi(R₁,R₂,R₃), R₁, R₂ et R₃ étant indépendamment Cl, H, un groupe alkyle en C₁-C₆, phényle, vinyle, alkylamino ou alkylsilyle,
1) est soumis à une ammoniolyse avec une amine de la formule générale RNH₂, R contenant du carbone,
2) le produit oligomère de la réaction selon 1) réagit encore avec Cl₃Si-NH-BCl₂, avec des composés de silanes contenant du chlore de la formule ClSi(R₁,R₂,R₃) ou avec un mélange des deux constituants,
3) on fait réagir le produit de la réaction selon 2) avec de l'ammoniaque dans une atmosphère inerte et on sépare ensuite le chlorure d'ammonium formé.

8. Procédé pour la préparation d'un matériau céramique, caractérisé en ce que l'on pyrolyse des composés oligomères ou polymères de borosilazanes selon l'une ou plusieurs quelconques des revendications 1 et 2 dans une atmosphère inerte ou contenant NH₃ ou sous vide à des températures comprises entre 600 et 2000°C, de préférence à des températures comprises entre 1 200 et 1 600°C.

9. Utilisation des composés oligomères ou polymères de borosilazanes selon l'une quelconque des revendications 1 ou 2 pour la préparation de fibres céramiques, de revêtements céramiques et de corps moulés céramiques.

10. Utilisation des composés oligomères ou polymères de borosilazanes selon l'une quelconque des revendications 1 ou 2 comme liant pour la préparation de corps verts pouvant être frittés et comme matériau de matrice respectivement de charge pour la préparation de matériaux composites contenant un matériau céramique.
